# EUROPEAN PATENT APPLICATION

(11) **EP 1 415 614 A2**
(43) Date of publication of application: **06.05.2004**
(21) Application number: 03425684.2
(22) Date of filing: 21.10.2003
(51) Int. Cl.: A61C 17/20, A61C 1/08

(54) **A dental handpiece for the removal of tartar**

(30) Priority: 29.10.2002 IT bo20020678
(71) Applicant: CASTELLINI S.p.A., I-40013 Castel Maggiore (Bologna) (IT)
(72) Inventor: Castellini, Franco, 40124 Bologna (IT)
(74) Representative: Lanzoni, Luciano

(57) **Abstract**

A dental handpiece for the removal of tartar comprises at least: a main outer body (2); means (3) for generating vibrations housed inside the main body (2); a tool (4) that can be connected to the vibration generating means (3) by screwing in such a way that a working tool tip (4a) is positioned at one end of the main body (2); means (5) designed to create an illuminated area and positioned close to the end of the main body (2) where the tool (4) is fitted; an end fitting (6) for connecting a cable (7) to the opposite free end of the main body (2) and presenting at least means (8) for connecting the vibration generating means (3) to a first utility and for connecting a second interface utility (9) to the means (5) for creating the illuminated area in such a way as to activate the latter when required. Between the main body (2) and the tool (4) and vibrating means (3) assembly, there are positioning means (10) that enable relative rotation between the tool (4) and the illuminating means (5) and to maintain this position in order to align the tool tip (4a) with the illuminated area irrespective of the position at which the tool (4) is locked to the vibrating means (3).

## Description

The present invention relates to a dental handpiece for the removal of tartar, commonly known as dental scaler.

This type of handpiece, which is very well known to those familiar with the trade, consists of an essentially cylindrical body fitted, at one end, with a dental cleaning tool. The tool, which is hook shaped, has a backwardly extending spindle that fits into a matching slot in the cylindrical body and connects with vibration generating means housed inside the body and acting on the tool in such a way as to cause it to vibrate during work. At the other end of the cylindrical body, the handpiece is connected to the end fitting of a cable containing the connections through which the vibrating means are powered. The vibrations imparted to the working end of the tool permit the removal of tartar from tooth surfaces.

Inside the cable there is a tube for supplying a fluid (usually water or a disinfectant physiological liquid) connected to a conduit extending inside the cylindrical body close to, and partly coaxial with, the tool mounting spindle and leading out to a point close to the tool work head, and, more specifically, close to the tip of the tool: thus, during treatment inside the oral cavity, the tool and the area surrounding it, are constantly sprayed with fluid whose function is to cool the handpiece itself and the contact area to which the vibrations are applied during operation of the tool.

Besides these accessories, the handpiece may also be equipped with means for lighting the working area, consisting of fibre optic cables interfaced, usually, with a light bulb located inside the handpiece or inside the end fitting of the handpiece cable.

Since the tool has to be screwed to the vibrating means using an appropriate tool, a slight mismatch between the thread on the tool and that in the slot may cause the tool to be fitted at an angle that does not coincide with the fixed light beam emitted by the fibre optics at the end of the handpiece.

To overcome this problem, prior art teaches the use of an annular fibre optic structure applied to the end of handpiece body to surround the tool tip in such a way that the working area can be well illuminated irrespective of the final angle at which the tool is fitted (an example of this fibre optic configuration is described in patent EP-75.096).

This solution, however, is not free of disadvantages, since this particular fibre optic structure means, on the one hand, that the optic fibres are not all used to best advantage to illuminate a precise working area (that is to say, the point coinciding with the angle at which the tool is fitted) but a circle of 360°, and, on the other hand, that the production cost of the handpiece is higher because it requires a large number of optic fibres and a suitable light source upstream of the handpiece.

The aim of the present invention is to overcome the above mentioned disadvantages by providing a dental handpiece for the removal of tartar equipped with a traditional fibre optic lighting unit and with a system for adjusting the work tool in such way that its angle always coincides exactly with that of the light beam emitted by the optic fibres irrespective of the connection to the vibrating means.

This aim is accomplished in a dental handpiece for the removal of tartar comprising: a main outer body; means for generating vibrations housed inside the main body; a tool that can be connected to the vibration generating means by screwing in such a way that a working tool tip is positioned at one end of the main body; means designed to create an illuminated area and positioned close to the end of the main body where the tool is fitted; an end fitting for connecting a cable to the opposite free end of the main body and presenting at least means for connecting the vibration generating means to a first utility and for connecting a second interface utility to the means for creating the illuminated area in such a way as to activate the latter when required. Between the main body and the tool and vibrating means assembly, there are positioning means that enable relative rotation between the tool and the illuminating means and to maintain this position in order to align the tool tip with the illuminated area irrespective of the position at which the tool is locked to the vibrating means. The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a perspective view of a dental handpiece, according to the present invention, for removing tartar;
- Figure 2 is a longitudinal section of the handpiece of Figure 1;
- Figure 3 is a cross section through line III-III of Figure 2;
- Figure 4 is a detail view showing the back of the handpiece in longitudinal section;
- Figure 5 is a perspective view, with some parts cut away in order to better illustrate others, of the back of the handpiece illustrated in the other figures.

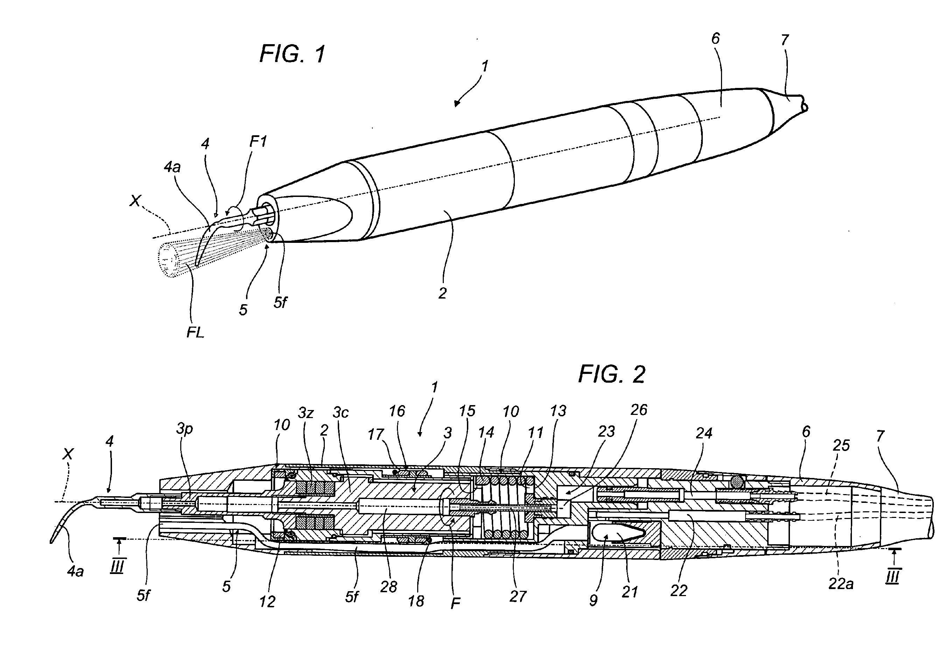

With reference to the accompanying drawings, in particular Figure 1, the handpiece according to the invention is used especially in dentistry to remove tartar from tooth surfaces.

This handpiece, denoted in its entirety by the numeral 1, basically comprises the following, insofar as is relevant to the present invention: an essentially cylindrical main outer body 2; means 3 for generating vibrations housed inside the main body 2; a tool 4 that can be connected to the vibration generating means 3 by screwing in such a way that a working tool tip 4a (usually hook shaped) is positioned at one end of the main body 2.

The handpiece also includes means 5 for creating an illuminated area and positioned close to the end of the main body 2 where the tool 4 is fitted.

These devices are connected to utilities through an end fitting 6 for joining a cable 7 to the opposite free end of the main body 2.

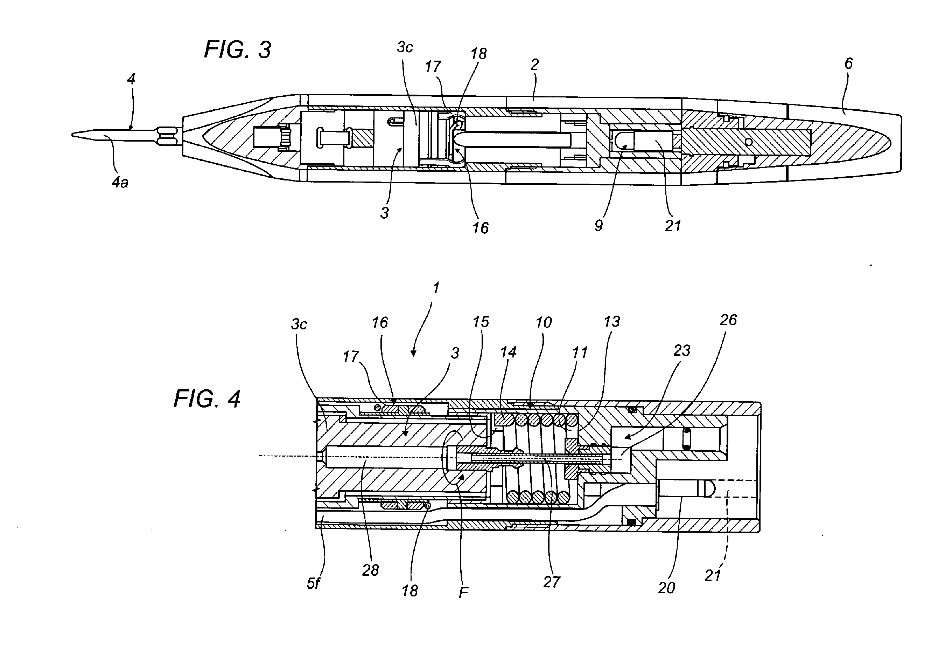

The end fitting 6 presents at least means 8 (illustrated by the broken line in Figure 4 since they are of known type) for connecting the vibration generating means 3 to a first power supply utility (located upstream of the cable 7 and for connecting a second interface utility 9 to the means 5 for creating the illuminated area in such a way as to activate the latter when required by the dental surgeon or dental assistant.

The handpiece 1 structured in this way further comprises positioning means 10, located between the main body 2 and the fitted assembly consisting of the tool 4 and the vibration generating means 3, said positioning means being designed to permit relative rotation about an axis X between the tool 4 and the illuminating means 5 and to maintain this position in order to align the tool tip 4a with the illuminated area irrespective of the position at which the tool 4 is locked to the vibrating means 3.

In other terms, once the tool 4 has been fixed to the vibrating means 3, the hook-shaped tip 4a can be aligned with the illuminated area created by the means 5 without weakening the stability of the connection between the tool 4 and the vibrating means 3.

As illustrated in Figures 2 and 3, the positioning means 10 are housed in the main body 2 and act at least on the vibration generating means 3 in such a way as to position the tool 4 about the common axis X so that it coincides with the illuminated area created by the illuminating means 5.

These positioning means 10 may be of the elastic-mechanical type, as illustrated, for example, in Figures 2 to 5.

In this solution, purely by way of example, these positioning means 10 may consist of the vibration generating means 3, consisting of a cylindrical body 3c, spring means 11 and a ring-shaped shim 12. The cylindrical body 3c comprises piezoelectric ceramic elements 3z and a vibrating transducer T that turn inside the main body 2 about the axis X.

The cylindrical body 3c further comprises a threaded central pin 3p to which the tool 4 can be screwed.

The aforementioned screw means 11, consisting basically of a spring, are housed inside the main body 2 and act on the end of the cylindrical body 3c opposite the end with the central pin 3p: this keeps the cylindrical body 3c in permanent contact with the aforementioned ring-shaped shim 12 located at the end of the cylindrical body 3c with the pin 3p.

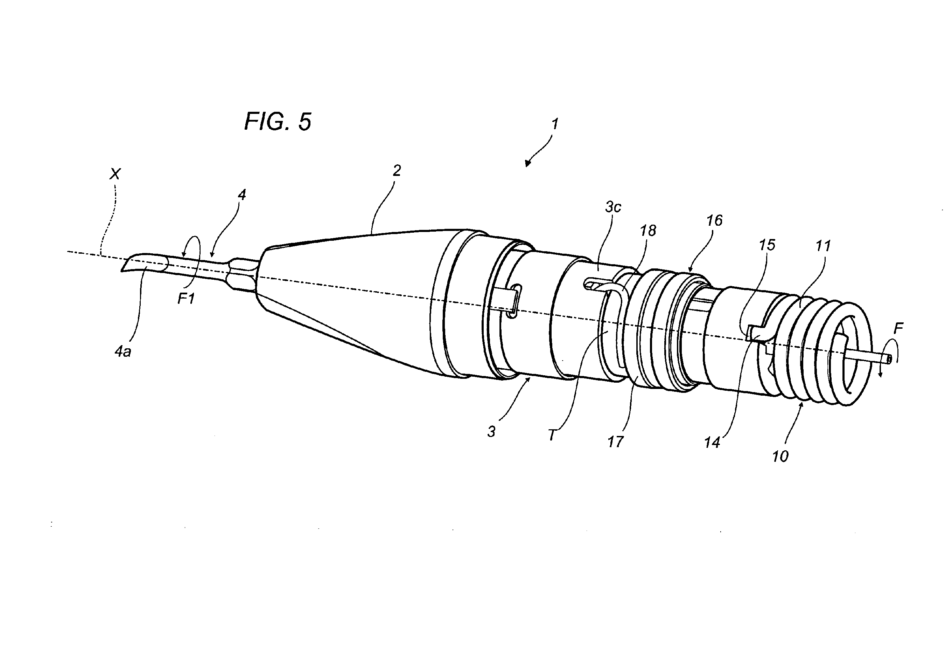

For permanently positioning the cylindrical body 3c, the spring 11 is interposed between a wall 13 of the main body 2 and the cylindrical body 3c itself, to which the spring is attached at one end (see Figure 5 in particular).

When the tool 4 is fitted to the pin 3p, the structure created by the body 3c and the spring 11 enables the assembly consisting of the cylindrical body 3c and the tool 4 to be turned in one direction with a tightening torque applied by a suitable tool (not illustrated) that is greater than the frictional resistance of the spring 11 on the cylindrical body 3c, while at the same time compressing the spring 11 itself, in such manner as to push the cylindrical body 3c away from the ring-shaped shim 12. In practice, this enables the tool 4 and body 3c to turn as one about the axis X (see arrow F in Figures 2 and 5) so as to correctly position the tool tip 4a relative to the means 5 that generate the illuminated area.

As clearly illustrated in Figure 2, 4 and 5, the spring 11 is securely fixed to the cylindrical body 3c, with one end or tooth 14 of it inserted in a matching slot 15 made in the cylindrical body 3c. This fit enables separation of the tool 4 from the cylindrical body 3c, causing the latter to come into contact with the ring-shaped shim 12 when the tool 4 is turned in the opposite direction (see arrow F1) in order to increase the radial dimensions of the spring 11, to twist lock the cylindrical body 3c and release the tool 4.

For connecting the aforementioned first utility to the transducer T, there are sliding contacts 16 which keep the transducer T supplied with power even when the tool is turned to another position in order to permit its alignment.

These sliding contacts 16 (see Figures 3, 4 and 5) comprise at least one ring 17 for connecting the power supply cables 18 of the transducer T to a rigid conductive surface 19, the ring extending in a direction parallel to the cylindrical body 3c and being equipped with quick-release means 20 connected to the aforementioned means 8 of connection to the first utility.

The aforementioned means 5 for generating an illuminated area comprise a bunch 5f of optical fibres extending inside the main body 2 and leading to the end of it where the tool 4 is fitted, so as to create a light beam directed at a defined area.

This bunch 5f of optical fibres is supplied by a lamp 21, constituting the aforementioned second utility 9, located inside the end fitting 6 and positioned at the rear end of the bunch 5f of optical fibres when the end fitting 7 is fitted.

As shown in Figure 2, the end fitting 6 also has a tube 22, connected to a third utility 22a, for supplying a fluid (usually air, drawn with a broken line in the illustration) used for cooling the lamp 21.

In addition to the above, the handpiece 1 comprises means 23 for the passage of another fluid for cooling the tool 4 (for example, water or a physiological liquid), said means 23 comprising a first tube segment 24 made in the end fitting 6 and connected to a fourth utility 25 (illustrated as a broken line in Figure 2), a second intermediate segment 26 made in the main body 2 and connecting the first segment 24 to a tube 27 which in turn connects with the cylindrical body 3c and passes through the spring 11.

The tube 27 can be turned about its axis, that coincides with the axis X, to permit positioning of the cylindrical body 3c-tool 4 assembly while maintaining the connection with a fourth segment 28 made in the cylindrical body 3c, coaxially coupled with the tube 27 and leading to the tool 4.

To use the handpiece, the dental surgeon or the dental assistant screws the tool 4 onto the pin 3p of the vibrating means 3 using a specially made spanner, until the tool 4 is fully locked.

Another turn of the spanner on the tool 4 overcomes the friction of the spring 11 against the wall 13 and of the transducer T against the ring 12 and, as a result, the spring 11 and the cylindrical body 3c simultaneously rotate together with the tool 4.

Obviously, this rotation continues until the tool tip 4a is aligned with the light beam, labelled FL in Figure 1, created by the optical fibres 5f. At this point, when the dental surgeon or the dental assistant releases the tool 4, the cylindrical body 3c-tool 4 assembly returns to the initial static position.

To separate the tool 4 from the pin 3p, the tool 4 is rotated in the opposite direction so as to increase the size of the spring 11 because this rotation is opposite the direction in which the helical spring 11 extends, thus locking the cylindrical body 3c and allowing the tool 4 to be unscrewed.

A handpiece made as described above achieves the aforementioned aims thanks to a tool tip positioning system that is extremely practical, compact and easy to operate.

The structure of the positioning means just described also enables the tool to be tightened to a defined extent: to accomplish this, it is sufficient to choose the type of thrust applied by the spring and the type of material which the spring is in contact with so as to obtain a defined amount of friction. This makes it possible to avoid the use of spanners traditionally used to fit the tool (for example, a torque wrench) which are expensive accessories for these handpieces.

The handpiece according to the invention is highly reliable and cost effective without departing from a standard configuration of the working parts and accessories.

The positioning system is fast and accurate, while enabling the tool to remain securely fitted to the vibrating means.

It will be understood that the invention can be modified and adapted in several ways without thereby departing from the scope of the inventive concept. Moreover, all the details of the invention may be substituted by technically equivalent elements.

## Claims

1. A dental handpiece for the removal of tartar, the handpiece (1) comprising at least:
- a main outer body (2);
- vibration generating means (3), housed inside the main body (2);
- a tool (4) that can be connected to the vibration generating means (3) by screwing in such a way that a working tool tip (4a) is positioned at one end of the main body (2);
- means (5) designed to create an illuminated area and positioned close to the end of the main body (2) where the tool (4) is fitted; and
- an end fitting (6) for connecting a cable (7) to the opposite free end of the main body (2) and presenting at least means (8) for connecting the vibration generating means (3) to a first power supply utility and for connecting a second interface utility (9) to the means (5) for creating the illuminated area in such a way as to activate the latter when required, the handpiece (1) being **characterised in that**, between the main body (2) and the tool (4) and vibrating means (3) assembly, it further comprises positioning means (10) that enable relative rotation between the tool (4) and the illuminating means (5) about an axis (X) and to maintain this position in order to align the tool tip (4a) with the illuminated area, irrespective of the position at which the tool (4) is locked to the vibrating means (3).

2. The handpiece according to claim 1, **characterised in that** the positioning means (10) are housed in the main body (2) and act at least on the vibration generating means (3) in such a way as to position the tool (4) about the common axis (X) so that it coincides with the illuminated area created by the illuminating means (5).

3. The handpiece according to claim 1 or 2, **characterised in that** the positioning means (10) are of the elastic-mechanical type.

4. The handpiece according to claim 1 or 2, **characterised in that** the positioning means (10) comprise the vibration generating means (3), consisting of a cylindrical body (3c) comprising piezoelectric ceramic elements (3z) and a vibrating transducer (T) that turn inside the main body (2); the cylindrical body (3c) further comprising a threaded central pin (3p) to which the tool (4) can be screwed.

5. The handpiece according to claim 4, **characterised in that** the means (10) comprise spring means (11) located inside the main body (2) and acting on the end of the cylindrical body (3c) opposite the end with the central pin (3p) and in such a way as to keep the cylindrical body (3c) in permanent contact with a ring-shaped shim (12) located at the end of the cylindrical body (3c) with the pin (3p).

6. The handpiece according to claim 5, **characterised in that** the spring means (11) are located between a wall (13) of the main body (2) and the cylindrical body (3c), to which they are connected at one end so that, when the tool (4) is fitted to the pin (3p), the assembly consisting of the cylindrical body (3c) and the tool (4) can be turned in one direction, with a tightening torque applied to the tool (4) that is greater than the frictional resistance of the spring (11) on the cylindrical body (3c) and on the ring-shaped shim (12).

7. The handpiece according to claim 6, **characterised in that** the spring means (11) are fixed to the cylindrical body (3c) with one end or tooth (14) inserted in a matching slot (15) made in the cylindrical body (3c) so as to permit separation of the tool (4) from the cylindrical body (3c), in combination with the action of the ring-shaped shim (12) when the tool (4) is turned in the opposite direction to increase the radial dimensions of the spring (11), thus twist locking the cylindrical body (3c).

8. The handpiece according to claim 4, **characterised in that** it comprises sliding contacts (16) for connecting the transducer (T) to the first utility to keep the transducer (T) supplied with power; the sliding contacts (16) comprising at least one ring (17) for connecting the power supply cables (18) of the transducer (T) to a rigid conductive surface (19), the ring extending in a direction parallel to the cylindrical body (3c) and being equipped with quick-release means (20) connected to the first utility located in an end fitting (6) attached to the end of the handpiece (1).

9. The handpiece according to claim 1, **characterised in that** the means (5) for generating an illuminated area comprise a bunch (5f) of optical fibres extending inside the main body (2) and leading to the end of it where the tool (4) is fitted, so as to create a light beam directed at a defined area; the bunch (5f) of optical fibres being supplied by a lamp (21) located inside the end fitting (6) and positioned at the rear end of the bunch (5f) of optical fibres.

10. The handpiece according to claim 9, **characterised in that** the end fitting (6) has a tube (22), connected to a third utility, for supplying a fluid used for cooling the lamp (21).

11. The handpiece according to claim 1, **characterised in that** it comprises means (23) for the passage of a tool (4) cooling fluid and comprising a first tube segment (24) made in the end fitting (6) and connected to a fourth utility (25), a second intermediate segment (26) made in the main body (2) and connecting the first segment (24) to a tube (27) which in turn connects with the vibration generating means (3) and passes through a part of the positioning means (10); the tube (27) being rotatable about its axis and being coaxially coupled to a fourth segment (28) made in the vibration generating means (3) and leading to the tool (4).
